# EUROPÄISCHE PATENTSCHRIFT

(11) **EP 0 700 494 B1**
(45) Veröffentlichungstag und Bekanntmachung des Hinweises auf die Patenterteilung: **17.12.1997**
(21) Anmeldenummer: 95906238.1
(22) Anmeldetag: 01.02.1995
(51) Int. Cl.: F16H 21/36, F16F 15/26

(54) **SCHUBKURBELGETRIEBE**
SLIDER-CRANK MECHANISM
MECANISME BIELLE-MANIVELLE

(30) Priorität: 01.02.1994 CH 281/94
(43) Veröffentlichungstag der Anmeldung: 13.03.1996
(73) Patentinhaber: Ulli, Andreas, 9305 Berg (CH)
(72) Erfinder: Ulli, Andreas, 9305 Berg (CH)
(74) Vertreter: Frei, Alexandra Sarah
(86) Internationale Anmeldenummer: CH9500021
(87) Internationale Veröffentlichungsnummer: WO9521341

(56) Entgegenhaltungen:
- DE-A- 4 013 034
- DE-C- 875 110
- FR-A- 1 319 313
- FR-A- 1 360 229
- US-A- 3 277 743

## Beschreibung

Die Erfindung bezieht sich auf ein Schubkurbelgetriebe nach dem Oberbegriff des unabhängigen Patentanspruchs, wie es z.B. aus der FR-A-1 319 313 bekannt ist.

Die Aufgabe dieser Erfindung ist es, ein Schubkurbelgetriebe mit einem exakten Ausgleich aller Massenkräfte sowie aller Massenmomente zu schaffen. Das Schubkurbelgetriebe gemäss Erfindung soll dabei eine möglichst einfache Konstruktion aufweisen, mit möglichst wenig beweglichen Teilen, welche sich entsprechend den auftretenden Belastungen dimensionieren lassen. Zudem soll eine Konstruktion möglich sein, bei der die Lagerungen des Sekundärrotors im oder in den Primärrotoren keine rechtwinklig zur Drehachse stehenden Momente übertragen müssen.

Die Erfindung entsprechend den im Anspruch 1 aufgeführten Merkmalen basiert auf dem Prinzip des im Primärrotor exzentrisch gelagerten, zu diesem gegengleich rotierenden Sekundärrotors. Sie hebt sich von den oben genannten Schubkurbelsystemen gemäss dem Stande der Technik insbesondere dadurch ab, dass der Sekundärrotor als Kurbelwelle, oder Exzenterwelle ausgebildet ist, mit mindestens zwei um jeweils 180 Grad versetzten Kurbelzapfen oder Exzenterzapfen, welche aufgrund ihrer identischen Exzentrizität zum Primärrotor zwei oder mehr als zwei rechtwinklig zueinander stehende, oszillierende Linearbewegungen ausführen. Diese Exzenterzapfen werden in der vorliegenden Schrift Schubzapfen genannt.

Die Hauptvorteile dieser Erfindung sind die folgenden:
- exakter Ausgleich nicht nur sämtlicher Massenkräfte sondern auch der Massenmomente, wodurch eine hohe Laufruhe erreicht wird;
- Einfachheit und Kompaktheit des Designs (wenig bewegte Teile);
- freie Dimensionierbarkeit aller belasteten Getriebekomponenten wie Wellendurchmesser, Gelenkdurchmesser, Schubstangen etc;
- Möglichkeit, einen wesentlich leichteren Kolben ohne Kolbenbolzen zum Einsatz zu bringen.
- Möglichkeit der sehr direkten Abstützung des Sekundärrotors in Längsführungen an allen oder einzelnen Schubzapfen.
- Elimination der Querkräfte auf die linear oszillierenden Bauteile wie Kolben etc.

Das erfindungsgemässe Schubkurbelgetriebe soll mit Hilfe der folgenden Figuren beschrieben werden. Diese zeigen:
- Figur 1: eine schematische Darstellung zur Definition von Kräften und Winkeln;
- Figur 2: einen Vier-Zylinder-Boxer mit Linearführungen und Kurbelwelle als Sekundärrotor;
- Figur 3: einen Vier-Zylinder-Boxer mit einer Kombination von Linearführung und Zahngetriebe und mit Kurbelwelle als Sekundärrotor;
- Figur 4: einen Vier-Zylinder-Stern mit Linearführungen und geteiltem Sekundärrotor;
- Figur 5: einen Antrieb für einen Pressentisch mit hohlem Sekundärrotor;
- Figur 6: den Zyklus eines Vier-Zylinder-Sternmotors (4Zyl. 2 Takt);
- Figur 7: den Zyklus eines Vier-Zylinder-Boxermotors (4Zyl. 4 Takt).

Die Figuren sind alle mit folgenden Bezugsnummern versehen:
1.1 Sekundärrotor-Wellenabschnitt für Lagerung in Primärrotor,
1.2 Sekundärrotor-Wellenabschnitt für Kurbelwangen;
1.3 Sekundärrotor-Wellenabschnitt fur Schubzapfen in x-Richtung,
1.4 Sekundärrotor-Wellenabschnitt für Schubzapfen in y-Richtung,
1.5 Sekundärrotor-Wellenabschnitt für Aussenzahnung,
2.1 Primärrotor links
2.2 Gegengewicht am Primärrotor links
2.3 Verbindungszapfen der beiden Primärrotoren;
3.1 Primärrotor rechts;
3.2 Gegengewicht am Primärrotor rechts;
4.1 angelenkte oszillierende Masse in x-Richtung;
4.2 Kreuzkopf in x-Richtung;
5.1 angelenkte oszillierende Masse in y-Richtung;
5.2 Kreuzkopf in y-Richtung;
6 Gehäuse;
6.1 gehäusefeste Innenzahnung

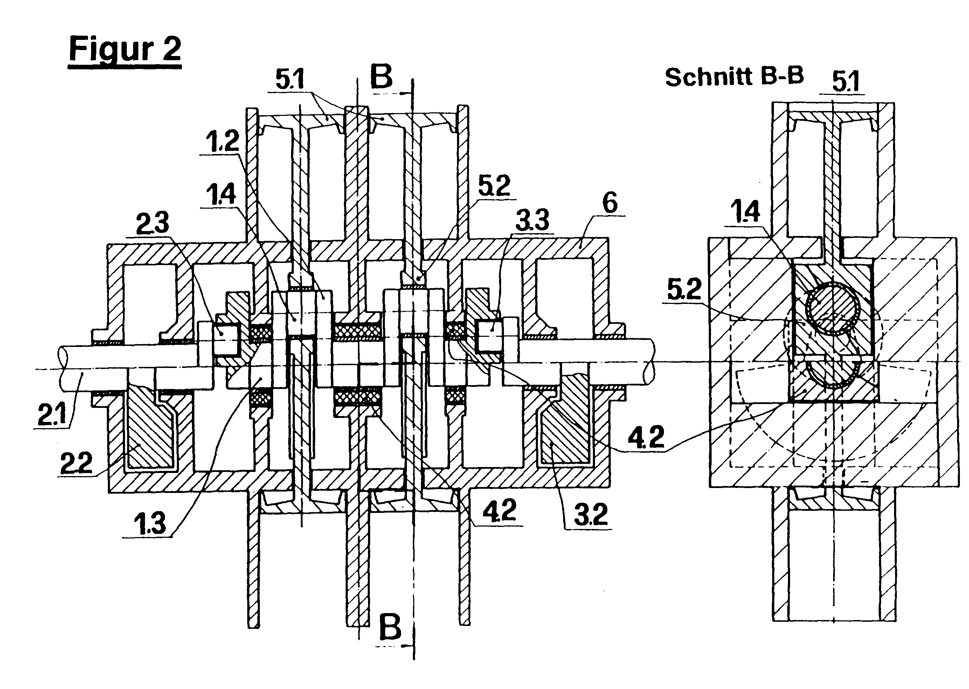

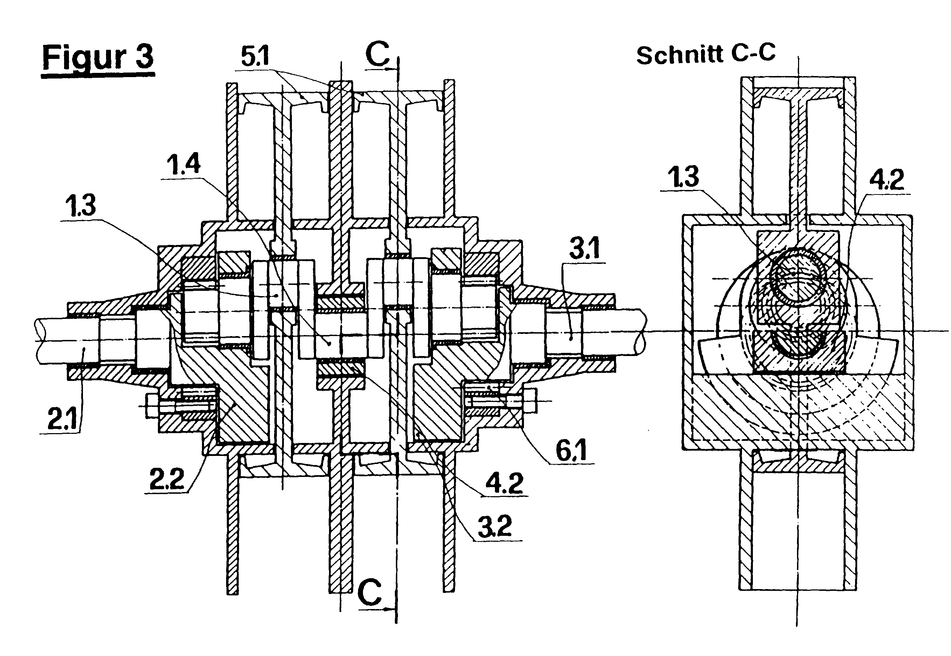

Das Primärrotorpaar und der Sekundärrotor zeigen den folgenden Aufbau: Im Gehäuse sind einander gegenüberliegend zwei koaxiale Primärrotoren (siehe Fig. 2 und 3 Pos.2.1 und 3.1) in der Primärachse z0 gelagert, wobei eine oder beide die Funktion der An- resp. Abtriebswelle übernehmen können. Die Primärrotoren weisen je ein Gegengewicht auf (siehe Fig. 2 und 3 Pos.2.2 und 3.2), dessen Schwerpunkt bezüglich der Primärachse (z0) genau gegenüber der Sekundärachse (zl) liegt. Die Primärrotoren können massiv gebaut sein, da sie gleichzeitig eine Schwungradfunktion einnehmen können. Ihre einseitige Lagerung ist dank dem exakten Kräfteausgleich zwischen Gegengewicht und Lagerung des Sekundärexzenters möglich. In gewissen Fällen empfiehlt sich aber eine lagerung beidseitig des Gegengewichtes (Fig. 2).

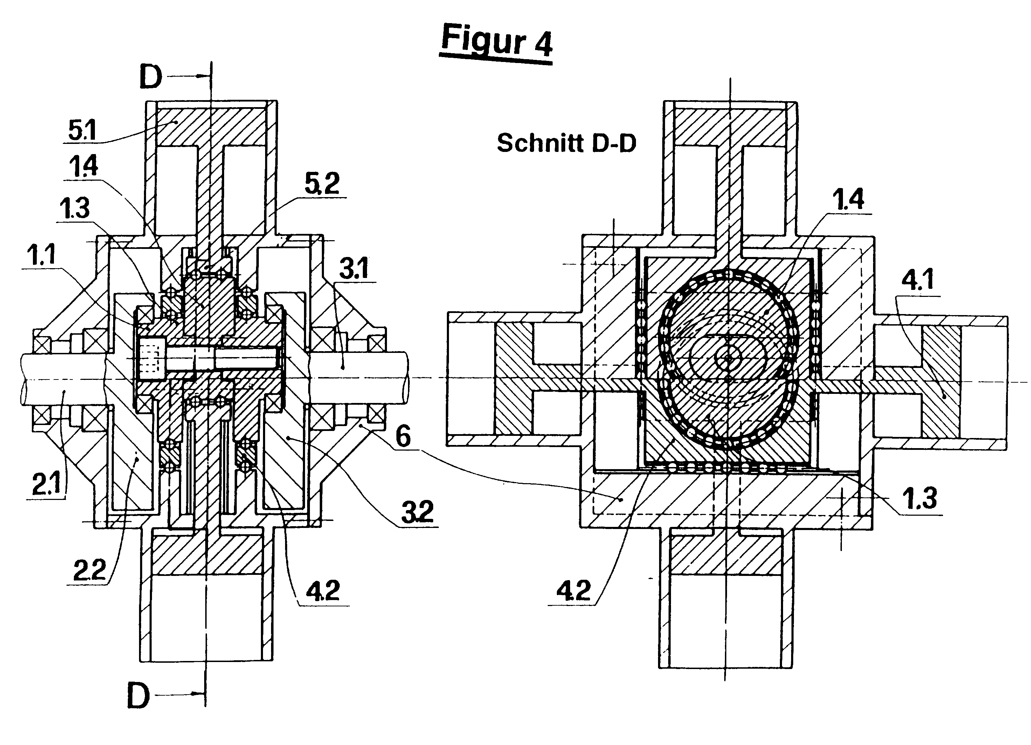

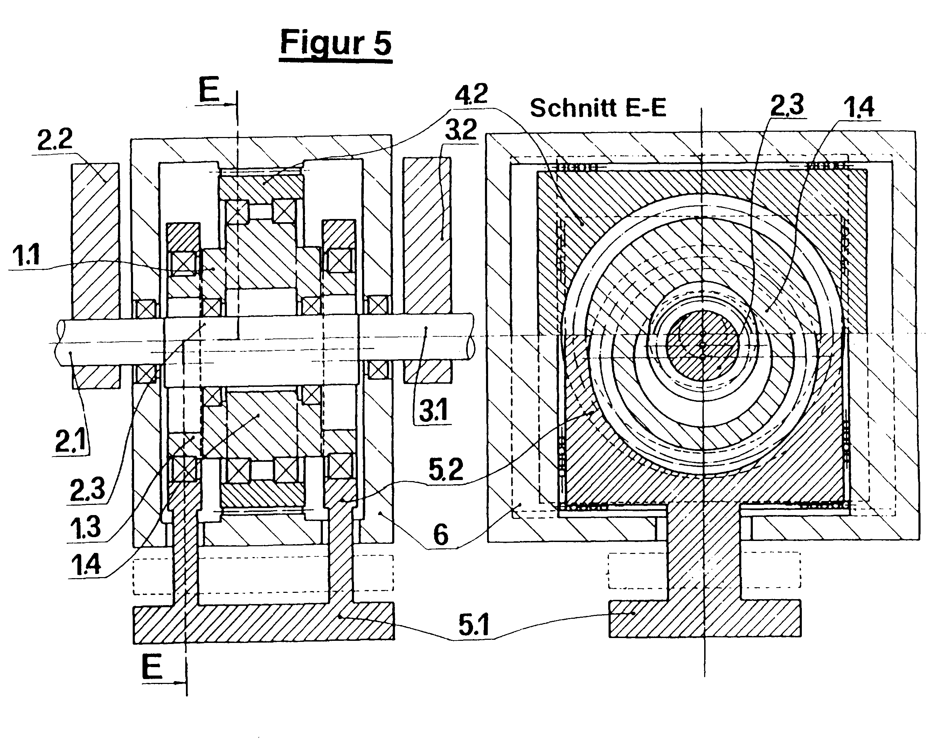

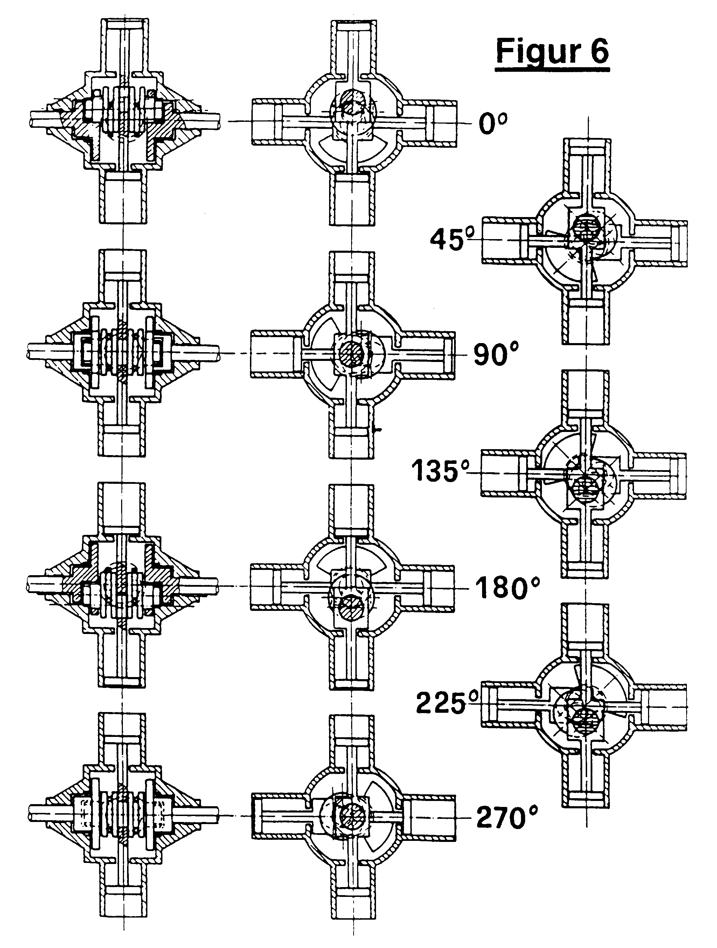

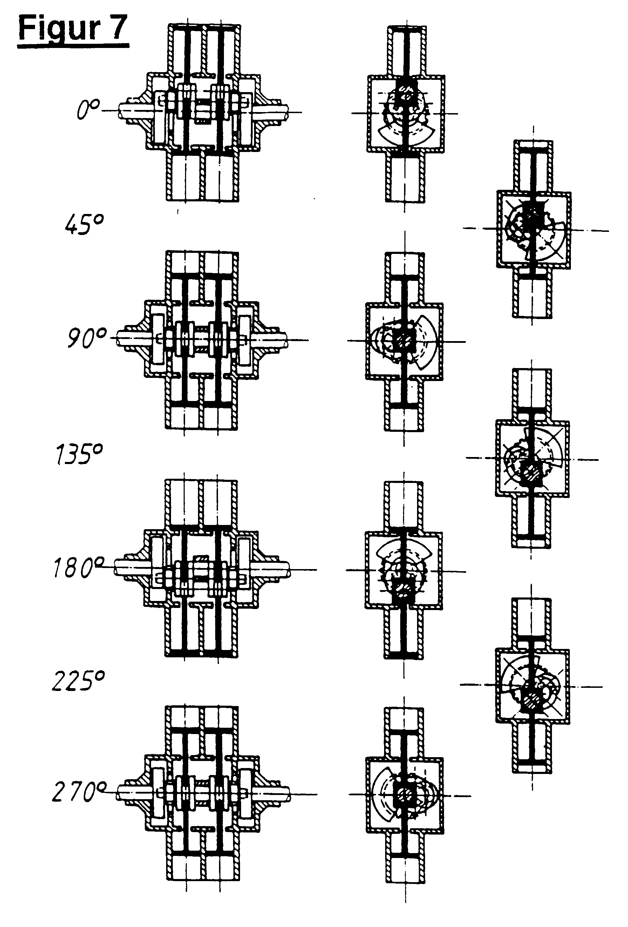

Zwischen den exzentrischen Lagern der Primärrotoren in der Sekundärachse z1 ist der Sekundärrotor in seinen beiden Enden gelagert. Der Sekundärrotor ist als Kurbelwelle (Fig. 2, 3, 6, 7) oder bei kleinen Hüben als Exzenterwelle (Fig. 4, 5) ausgebildet. Für sehr kleine Hübe bei grossen Kräften lässt sich der Sekundärrotor auch als Hohlwelle ausführen, womit die Möglichkeit eines durchgehenden Primärrotors gegeben ist (Fig. 7).

Gegenläufiger Synchronlauf und Parallelführung des Sekundärrotors: Der Sekundärrotor muss parallel zur Primärachse (z0) geführt sein, was vorteilhafterweise nicht Aufgabe dessen Lagerung im Primärrotor ist. Zudem muss die Drehgeschwindigkeit des Sekundärrotors um die Sekundärachse (z1) zu jener der Primärrotoren um die Primärachse (z0) entgegengesetzt und genau gleich sein. Diese beiden Bedingungen werden durch lineare Führung der Schubzapfen im Gehäuse erfüllt.

Die um 180 Grad versetzten Schubzapfen weisen zwei rechtwinklig zueinander stehende Linearbewegungen in x- und y-Richtung auf. Werden nun Schubzapfen in beiden Richtungen linear geführt, so ist die Lage des Sekundärrotors eindeutig definiert. Die Linearführungen werden am einfachsten dadurch erzeugt, dass die Schubstangenlager gleichzeitig seitliche Führungen aufweisen wie Kreuzköpfe (siehe Fig. 2). Die auf den ersten Blick kompliziert erscheinenden gekreuzten Linearführungen im Gehäuse lassen sich zum Beispiel durch gestufte, diagonale Teilung, wie in Fig. 2, angedeutet, relativ leicht bearbeiten. Die Massenkräfte werden über das Gehäuse geleitet, welches entsprechend steif sein muss. Diese Konstruktion erlaubt höhere Drehzahlen dank der vielen Möglichkeiten zum Abstützen des Sekundärrotors. Bei dieser Kreuzkopfanwendung sind die aus klassischen Kurbeltrieben bekannten Schmierprobleme eliminiert, da der Schubkurbelzapfen im Kreuzkopf eine konstante Drehgeschwindigkeit aufweist. Der Sekundärrotor kann zur zusätzlichen Stabilisierung oder Versteifung Aussenzahnungen aufweisen, welche sich mit gehäuseseitigen Innenzahnungen kämmen, wie in Fig. 3 angedeutet.

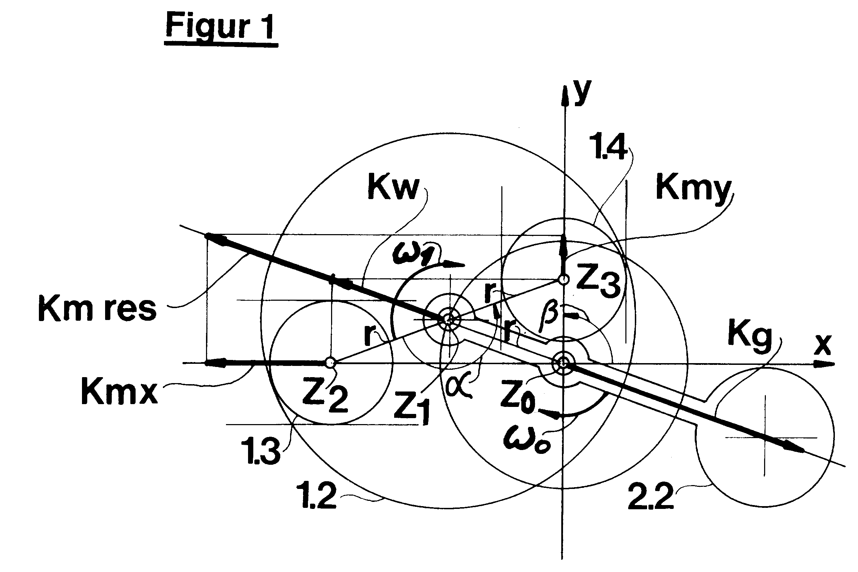

Grundsätzlich entspricht jedem Schubzapfen-Versetzungswinkel a bezüglich der Sekundärachse ein Winkel β der entsprechenden Linearbewegung bezüglich der Primärachse, wobei β = 1/2α (siehe Fig. 1).

Die ausgeglichenste Konstruktion ergibt sich jedoch bei einem Sekundärrotor, bei welchem sich die Schubzapfen ausschliesslich auf zwei, bezüglich der Sekundärachse (zl) sich gegenüberliegende um 180 Grad versetzte Schubachsen (z2 und z3) verteilen. Daraus ergeben sich zwei rechtwinklig zueinander stehende Linearbewegungen, welche bei konstanter Drehbewegung sinusförmig verlaufen und zwar derart, dass aus den beiden Kräften für die Linearbeschleunigungen (Kmx und Kmy) eine konstante Kraft (Km res) resultiert, welche bei symmetrischer Auslegung genau durch den gemeinsamen Schwerpunk der beiden Gegengewichte der Halbwellen (Primärrotoren) verläuft. Mit der Bedingung, diese Eigenschaft zu erhalten, ergeben sich in erster Linie folgende Zylinderformationen, welche einen kompletten Massenausgleich ermöglichen und sich durch einen kurzen Sekundärrotor auszeichnen:
- Zwei-Takt Varianten: 1 Zylinder, Zwei-Zylinder-Boxer, Vier-Zylinder-Stern (4x90Grd.) (siehe Fig. 4), Acht- Zylinder-Stern (4x90Grd ,zwei in Reihe);
- Vier-Takt Varianten: Ein-Zylinder, Zwei-Zylinder-Reihe, Vier-Zylinder-Boxer (Siehe Fig. 2, 3), Acht-Zylinder-Stern (4x90Grd, zwei in Reihe).

Natürlich lassen sich mehrere oben beschriebene Einheiten durch Kombination oder Koppelung von Primärrotoren axial zusammenschalten.

Die Bewegten Massen des Getriebes lassen sich in folgende Gruppen einteilen: Primärrotoren mit Gegengewichten, Sekundärrotor, angelenkte Massen (Kolben).

Primärrotor und Gegengewichte (Pos. 2 und 3) weisen nur eine Rotationsachse (Primärachse z0) auf und haben demzufolge ein konstantes Massenträgheitsmoment bezüglich dieser Achse. Durch die Rotation entsteht aufgrund des Gegengewichtes eine konstante umlaufende Radialkraft (Fig. 1, Kg).

Die Bewegung des Sekundärrotors ist ausgezeichnet durch die beiden überlagerten gegengleichen Rotationen um die Primär- und um die Sekundärachse. Normalerweise entstehen bei sich überlagernden Dehbewegungen Veränderungen des Gesamt-Massenträgheitsmoments bezüglich der ruhenden Primärachse z0, welche sich in Form von freiwerdenden Massenmomenten widerspiegeln. Ein ganz spezielles Merkmal des hier beschriebenen Sekundärrotors ist die Tatsache, dass solche Veränderungen des Massenträgheitsmoments durch geeignete geschaltung desselben verhindert werden können, z.B. dadurch, dass der Sekundarrotor an jeder Stelle rotations-Symmetrisch ist zu einer der Achsen Z1, Z2 oder Z3.

Die angelenkten Massen (Kolben) weisen keine Rotation um die Primärachse auf.

Die Summe aller linear bewegten Massen in x-Richtung inkl. der Massen der Schubzapfen auf Achse z2 ist gleich gross wie die Summe aller linear bewegten Massen in y-Richtung inkl. der Massen der Schubzapfen mit Achse z3. Bei richtiger Dimensionierung wird die Summe der aus den Linearbeschleunigungen resultierenden Kraft (Km res, resultiernde aus Kmx und Kmy) und aus der gleichgerichteten Radialkraft der zur Sekundärachse rotationssymmetrischen Anteile des Sekundärrotors (Kw) genau kompensiert durch die entgegengesetzte Radialkraft des Gegengewichtes (Kg). Es lassen sich also sämtliche Massenkräfte ausgleichen und auch Massenmomente werden keine frei.

Massenmomente aufgrund von Drehbeschleunigungen lassen sich komplett ausgleichen durch eine rotierende Welle, welche zum Beispiel mittels Verzahnung oder Kette als Vorgelege an die Primärrotoren gekoppelt wird.

## Patentansprüche

1. Schubkurbelgetriebe zur Umsetzung einer Rotationsbewegung in zwei senkrecht zueinander stehende sinusförmig oszillierende Linearbewegungen mittels zwei sich gegenüberliegenden in einer Primärachse (z0) gehäuseseitig gelagerten Primärrotoren (2.1 und 3.1), in denen dazwischenliegend exzentrisch ein Sekundärrotor in einer Sekundärachse (z1) beidseitig derart gelagert ist, dass die Sekundärachse im Abstand r = 1/4 Hub zur Primärachse steht, wobei der Sekundärrotor als Kurbelwelle oder Exzenterwelle ausgebildet ist mit mindestens zwei, bezüglich der Sekundärachse sich gegenüberliegenden, im Abstand r = 1/4 Hub parallel zur Sekundärachse stehenden Kurbelzapfenachsen oder Exzenterzapfenachsen (z2 und z3), welche sich als Schubachsen je in einer Ebene bewegen, wobei diese Ebenen rechtwinklig zueinander stehen und sich in der Primärachse schneiden, wobei der Sekundärrotor zu jeder dieser Schubachsen mindestens einen dazu rotationssymmetrischen Wellenabschnitt als Schubzapfen (1.3 und 1.4) aufweist, wobei entweder an den Schubzapfen mittels Schubstangen Massen angelenkt sind, deren Schwerpunkte sich auf geraden Bahnen rechtwinklig zur Primärachse in der Ebene bewegen, welche durch die entsprechende Schubachse erzeugt wird, oder wobei die Schubzapfen freihängend als Ausgleich der rechtwinklig dazu linear bewegten Massen dienen, wobei die Gesamtmasse aller zu der einen Schubachse rotationssymmetrischen Wellenabschnitte inklusive der daran angelenkten Massen gleich gross ist wie die Gesamtmasse aller zu der anderen Schubachse rotationssymmetrischen Wellenabschnitte inklusive der daran angelenkten Massen, und wobei an den Primärrotoren Gegengewichte angebracht sind, deren Schwerpunkte bezüglich der Primärachse gegenüber der Sekundärachse angeordnet sind, zum exakten Ausgleich aller Massenkräfte, welche durch die Beschleunigungen des Sekundärrotors und der daran angelenkten Massen entstehen, **dadurch gekennzeichnet**, dass der Gleichlauf der Rotation beider Primärrotoren um die Primärachse und die dazu gegengleiche Rotation des Sekundärrotors um die Sekundärachse/sowie die Parallelität der Sekundärachse zur Primärachse sich dadurch direkt ergeben, dass die Schubzapfen beider Schubachsen (Z2, Z3) linear geführt sind parallel zu der Ebene, welche durch die entsprechende Schubachse erzeugt wird.

2. Schubkurbelgetriebe gemäss Anspruch 1, **dadurch gekennzeichnet**, dass der Gleichlauf der Rotation beider Primärrotoren um die Primärachse und die dazu gegengleiche Rotation des Sekundärrotors um die Sekundärachse/sowie die Parallelität der Sekundärachse zur Primärachse sich dadurch direkt ergeben, dass zusätzlich zu den Linearführungen der Schubzapfen am Sekundärrotor Aussenzahnungen mit Radius r = 1/4 Hub und Zähnezahl Z angebracht sind, deren Zentren auf der Sekundärachse liegen und welche kämmen mit gehäuseseitigen Innenzahnungen (6.1) mit Radius 2r = 1/2 Hub und Zähnezahl 2Z, deren Zentren auf der Primärachse liegen.

3. Schubkurbelgetriebe gemäss einem der Ansprüche 1 oder 2, **dadurch gekennzeichnet**, dass der Sekundärrotor an jeder Stelle bezüglich der Sekundärachse (z1) oder bezüglich einer der Schubachsen (z2, z3) rotationssymmetrisch ist.

4. Schubkurbelgetriebe gemäss Anspruch 3, **dadurch gekennzeichnet**, dass der Sekundärrotor als Hohlwelle ausgegebildet und auf einem Kurbelzapfen oder Exzenterzapfen (2.3) gelagert ist, welcher mit beiden Primärrotoren (2.1 und 3.1) kraftschlüssig verbunden und zur Sekundärachse rotationssymmetrisch ist, womit die beiden Primärrotoren zu einem durchgehenden Rotor vereinigt sind.

5. Schubkurbelgetriebe gemäss Anspruch 3, **dadurch gekennzeichnet**, dass der Sekundärrotor geteilt ist, entweder in einer Ebene durch die Sekundärachse oder, im Falle vom Einsatz von Wälz- oder Kugellager auf den Schubzapfen, in Ebenen rechtwinklig zur Sekundärachse.

6. Schubkurbelgetriebe gemäss Ansprüchen 1, 3 und 4, **dadurch gekennzeichnet**, dass ein im Gehäuse gelagerter Ausgleichsrotor, dessen Achse zur Primärachse parallel steht und mittels Kette oder Zahnräder mit dem Primärrotor gekoppelt und so bemessen ist, dass auch jene Massenmomente, welche durch Drehbeschleunigung des Schubkurbeltriebes hervorgerufen werden aufgrund unterschiedlicher Massenträgheitsmomente der Primärrotoren einerseits und des dazu gegenläufigen Sekundärrotors andererseits, exakt ausgeglichen werden.

7. Schubkurbelgetriebe gemäss einem der Ansprüche 1 bis 6 **dadurch gekennzeichnet**, dass die An- oder Abtriebswelle entweder an einem der Primärrotoren oder an einer im Gehäuse gelagerten Vorgelegewelle, deren Achse parallel zur Primärachse steht und welche mittels Zahngetriebe oder Ketten mit den Primärrotoren gekoppelt ist, angeflanscht ist.

## Claims

1. Slider crank mechanism for transforming a rotational movement into two sinusoidally oscillating linear movements at right angles to one another by means of two facing primary rotors (2.1 and 3.1) mounted on the casing side in a primary axis (zO) and in which is interposed eccentrically is mounted on either side in a secondary axis (zl) a secondary rotor in such a way that said secondary axis is at a distance r = 1/4 stroke from the primary axis, the secondary rotor being constructed as a crankshaft or eccentric shaft and having two crank pin axes or eccentric pin axes (z2 and z3) facing with respect to the secondary axis and at a distance r = 1/4 stroke parallel to the secondary axis, each moving as thrust axes in a plane, said planes being at right angles to one another and intersecting in the primary axis, the secondary rotor having with respect to each of these slider axes at least one shaft section rotationally symmetrical thereto as a slider pin (1.3 and 1.4), masses either being articulated to the slider pins by means of thrust rods, whose centres of gravity move on straight paths at right angles to the primary axis in the plane produced by the corresponding slider axis, or the slider pins in freely hanging manner compensate the masses moved linearly at right angles thereto, the total mass of all shaft sections rotationally symmetrical to a slider axis, including the masses articulated thereto being the same as the total mass of all the shaft sections rotationally symmetrical to the other slider axis, including the masses articulated thereto and in which to the primary rotors are fitted counterweights, whose centres of gravity with respect to the primary axis face the secondary axis, for the precise compensation of all inertia forces, which result from accelerations of the secondary rotor and masses articulated thereto, characterized in that the equidirectional nature of the rotation of both primary rotors about the primary axis and the contrarotation of the secondary rotor about the secondary axis, as well as the parallel nature of the secondary axis to the primary axis are directly obtained in that the slider pins of both slider axes (z2, z3) are linearly guided and are parallel to the plane produced through the corresponding slider axis.

2. Slider crank mechanism according to claim 1, characterized in that the equidirectional nature of the rotation of both primary rotors about the primary axis and the contrarotation of the secondary rotor about the secondary axis, as well as the parallel nature of the secondary axis to the primary axis are directly obtained in that in addition to the linear guides of the slider pins on the secondary rotor are fitted external teeth with a radius r = 1/4 stroke and a tooth number Z, whose centres are located on the secondary axis and which mesh with casing-side internal teeth (6.1) with a radius 2r = 1/2 stroke and a tooth number 2Z, whose centres are on the primary axis.

3. Slider crank mechanism according to one of the claims 1 or 2, characterized in that the secondary rotor is rotationally symmetrical at each point with respect to the secondary axis (zl) or with respect to one of the slider axes (z2, z3).

4. Slider crank mechanism according to claim 3, characterized in that the secondary rotor is constructed as a hollow shaft and is mounted on a crank pin or eccentric pin (2.3), which are non-positively connected to both primary rotors (2.1 and 3.1) and is rotationally symmetrical to the secondary axis, the two primary rotors being combined into a through rotor.

5. Slider crank mechanism according to claim 3, characterized in that the secondary rotor is split, either in a plane through the secondary axis or, in the case of using roller or ball bearings on the slider pins, in planes at right angles to the secondary axis.

6. Slider crank mechanism according to claims 1, 3 and 4, characterized in that a compensating rotor mounted in the casing and whose axis is parallel to the primary axis and is coupled by means of a chain or gear wheels with the primary rotor is so dimensioned that any mass moments caused by rotational acceleration of the slider crank drive, are exactly compensated due to different mass moments of inertia of the primary rotors on the one hand and the contrarotating secondary rotor on the other.

7. Slider crank mechanism according to one of the claims 1 to 6, characterized in that the driving or driven shaft is either flanged to one of the primary rotors or to a back gear shaft mounted in the casing, whose axis is parallel to the primary axis and which is coupled to the primary rotors by means of a toothed gear or chains.

## Revendications

1. Mécanisme bielle - manivelle destiné à transformer un mouvement de rotation en deux mouvements linéaires oscillants de manière sinusoïdale, perpendiculaires l'un par rapport à l'autre, par l'intermédiaire de deux rotors primaires (2.1 et 3.1) montés diamétralement opposés sur le côté boîtier sur un axe primaire (z0), dans lesquels un rotor secondaire est monté sur les deux côtés, de manière excentrique en position intermédiaire, sur un axe secondaire (zl) de telle sorte que l'axe secondaire se trouve à une distance r = 1/4 de la course par rapport à l'axe primaire, le rotor secondaire se présentant sous la forme d'un arbre à manivelle ou d'un arbre d'excentrique, comprenant au moins deux axes de tourillon de manivelle ou axes de tourillon d'excentrique (z2 et z3), respectivement opposés par rapport à l'axe secondaire, disposés à une distance r = 1/4 de la course, parallèlement à l'axe secondaire, qui se déplacent respectivement dans un plan sous la forme d'axes de poussée latérale, ces plans étant disposés à angles droits l'un par rapport à l'autre et se coupant sur l'axe primaire, le rotor secondaire présentant, par rapport à chacun de ces axes de poussée latérale, au moins une section d'arbre symétrique en rotation par rapport à ceux-ci, en tant que tourillon de poussée latérale (1.3 et 1.4), dans lequel soit des masses sont montées articulées sur les tourillons de poussée latérale par l'intermédiaire de bielles, dont les centres de gravité se déplacent, suivant des trajectoires droites à angles droits par rapport à l'axe primaire, dans le plan qui est défini par l'axe de poussée latérale correspondant, soit dans lequel les tourillons de poussée latérale font office, en suspension libre, d'égalisation pour les masses qui se déplacent de manière linéaire à angles droits par rapport à ceux-ci, la masse globale de toutes les sections d'arbre symétriques en rotation par rapport audit un axe de poussée latérale, y compris les masses qui y sont montées de manière articulée, équivalant à la masse globale de toutes les sections d'arbre symétriques en rotation par rapport à l'autre axe de poussée latérale, y compris les masses qui y sont montées de manière articulée, et dans lequel des contrepoids sont disposés au niveau des rotors primaires, dont les centres de gravité sont disposés, par rapport à l'axe primaire, vis-à-vis de l'axe secondaire, pour réaliser une égalisation précise de toutes les forces proportionnelles à la masse, qui sont engendrées par les accélérations du rotor secondaire et des masses articulées sur celui-ci, caractérisé en ce que le synchronisme de la rotation des deux rotors primaires autour de l'axe primaire et la rotation identique opposée du rotor secondaire autour de l'axe secondaire, ainsi que le parallélisme de l'axe secondaire par rapport à l'axe primaire, sont directement obtenus par le fait que les tourillons de poussée latérale des deux axes de poussée latérale (z2, z3) sont conduits de manière linéaire parallèlement au plan qui est défini par l'axe de poussée latérale correspondant.

2. Mécanisme bielle - manivelle selon la revendication 1, caractérisé en ce que le synchronisme de la rotation des deux rotors primaires autour de l'axe primaire, et la rotation identique opposée du rotor secondaire autour de l'axe secondaire, ainsi que le parallélisme de l'axe secondaire par rapport à l'axe primaire, sont directement obtenus par le fait qu'en plus des conduites linéaires des tourillons de poussée latérale au niveau du rotor secondaire, des dentures extérieures d'un rayon r = 1/4 de la course et comprenant un nombre de dents Z sont prévues, dont les centres se situent sur l'axe secondaire et qui s'engrènent avec des dentures intérieures (6.1) disposées sur le côté boîtier, d'un rayon 2r = 1/2 de la course et comprenant un nombre de dents 2Z, dont les centres se situent sur l'axe primaire.

3. Mécanisme bielle - manivelle selon la revendication 1 ou 2, caractérisé en ce que le rotor secondaire est symétrique en rotation en tout endroit par rapport à l'axe secondaire (zl) ou par rapport à un des axes de poussée latérale (z2, z3).

4. Mécanisme bielle - manivelle selon la revendication 3, caractérisé en ce que le rotor secondaire se présente sous la forme d'un arbre creux et est monté sur un tourillon de manivelle ou un tourillon d'excentrique (2.3), qui est relié aux deux rotors primaires (2.1 et 3.1) par l'action inhérente à la force qu'il exerce et qui est symétrique en rotation à l'axe secondaire, de sorte que les deux rotors primaires sont réunis ensemble pour donner un rotor continu.

5. Mécanisme bielle - manivelle selon la revendication 3, caractérisé en ce que le rotor secondaire est divisé, soit dans un plan passant par l'axe secondaire, soit, dans le cas où des roulements ou des roulements à billes sont utilisés dans le tourillon de poussée latérale, dans des plans à angles droits par rapport à l'axe secondaire.

6. Mécanisme bielle - manivelle selon les revendications 1, 3 et 4, caractérisé en ce qu'un rotor d'égalisation monté dans le boîtier, dont l'axe est parallèle à l'axe primaire et est accouplé par l'intermédiaire d'une chaîne ou de roues dentées avec le rotor primaire et est dimensionné dans des conditions telles que même tous moments massiques qui pourraient être engendrés par l'accélération en rotation du mécanisme bielle - manivelle sont compensés de manière exacte en raison des moments d'inertie de masse différents des rotors primaires d'une part, et du rotor secondaire tournant dans le sens contraire de celui-ci, d'autre part.

7. Mécanisme bielle - manivelle selon l'une des revendications 1 à 6, caractérisé en ce que l'arbre d'entrée ou l'arbre de sortie est bridé, soit sur un des rotors primaires soit sur un arbre de renvoi monté dans le boîtier, dont l'axe est parallèle à l'axe primaire et qui est accouplé au rotor primaire, par l'intermédiaire d'un mécanisme à engrenages ou de chaînes.
